# EUROPEAN PATENT APPLICATION

(11) **EP 4 446 375 A1**
(43) Date of publication of application: **16.10.2024**
(21) Application number: 23168230.3
(22) Date of filing: 17.04.2023
(51) Int. Cl.: C08K 5/00, C08K 5/103, C08K 11/00, C08L 1/12, C08J 3/18, C08J 3/20, C08K 3/013, C08K 3/36

(54) **METHOD FOR PREPARATION OF THERMOPLASTIC CELLULOSE ACETATE COMPOSITION AND COMPOSITIONS**

(30) Priority: 14.04.2023 LT 2023517
(71) Applicant: Kaunas University of Technology, 44029 Kaunas (LT)
(72) Inventor: Rutkaite, Ramune, Kaunas (LT); Bendoraitiene, Joana, Kaunas (LT); Peciulyte, Laura, Kaunas (LT); Liudvinaviciute, Dovile, Kaunas (LT); Baltakys, Kestutis, Kaunas (LT); Gineika, Andrius, Kaunas (LT)
(74) Representative: Pakeniene, Ausra

(57) **Abstract**

The invention discloses a method for preparation of thermoplastic cellulose acetate composition comprising inorganic fillers, where the method comprises: cellulose acetate fractionation; synthesizing inorganic filler particles from silica gel being a waste product of aluminium fluoride production or from opoka rock; mixing cellulose acetate granules with inorganic filler particles and a plasticizer; extruding and granulating.

The method steps allow preparation of thermoplastic polymer compositions with improved flow of melt characteristics, facilitating further processing of the bio-based compositions. The method steps allow lowering energy needs in the extrusion process, decreasing stiffness of extruded cellulose acetate compositions, exploiting sustainable easily available natural and waste materials.

## Description

### Technical field

The invention relates to the field of bio-based polymer composite materials and in particular to a preparation method of thermoplastic cellulose acetate comprising inorganic fillers and compositions obtained using such method.

### Background art

Synthetic thermoplastics have been extensively used for a variety of purposes because of their excellent mechanical properties, chemical resistance, and durability. However, such synthetic polymers have a disadvantage in that harmful substances are released when they are incinerated because they are not decomposed by themselves in nature.

Recently, environmental pollution problem has become a big social problem, and biodegradable thermoplastics that can be completely decomposed in nature into the harmless residues have been actively studied and are attracting interest worldwide. Cellulose derivatives such as cellulose and cellulose esters and cellulose ethers have recently attracted a great deal of attention as biomass materials that are produced most in the world and as biodegradable materials in the environment. Cellulose acetate is one of the marketed cellulose derivatives, which is a very tough material with excellent optical transparency but poor processability, requiring high concentrations of plasticizer during processing, because the thermal cracking temperature and melting temperature of modified cellulose is very close. Therefore, the molding composition cannot be processed thermoplastically unless a plasticizer is added. For this purpose, a suitable plasticizer must be mixed in before the thermoplastic processing. Various plasticizers have been used for this purpose. However, high-molecular-weight plasticizer cannot be easily found, and low molecular weight plasticizers have been used as plasticizers for cellulose acetate, prioritizing non-toxic ones and compatible with cellulose acetate.

Mineral fillers are successfully used as modifiers of polymer materials properties, more and more often being a good alternative to synthetic fibers such as carbon fibers, aramide or nylon fibers or glass fibers. They not only reduce the cost of the final product, but also improve parameters such as: mechanical strength, thermal stability, and flame resistance, as well as dielectric properties. Their addition also affects the processing of the polymer. The filler can be introduced into the polymer by various methods including melt-mixing, melt extrusion, and injection molding. Mineral fillers for thermoplastics often include natural sedimentary rocks, like calcium carbonate, mica, clinoptilolite, zeolites, kaolin, silica, titanium dioxide or diatomaceous earth, and clay minerals of various structure. Mineral fillers can be used directly or after surface treatment, depending on the nature of the polymer.

Variety of their parameters span from density, hardness, grain size, and shape to internal structure (porosity), crystallinity, surface area, moisture (water) content, and hydrophobicity. The structure of these fillers in general is not quite compatible to polymer matrix. Surface modification or additional treatment (milling, grinding, chemical treatment or surface modification, calcination) is often required to produce appropriate properties enabling effective dispersion in polymer and miscibility. Natural fillers of the same type but different origin show diversity of composition, presence of absence of additional ions, or intrusive phases. There are numerous properties of the fillers or their combinations to be considered when applying them to the polymer composite, and the composite's target key properties and function should be an indication to choose suitable material. Fillers can influence appearance, electrical, and mechanical properties, like impact resistance and tensile strength, wear, and fatigue resistance.

Korea patent publication No.: KR100912698B1 discloses biodegradable thermoplastic composition comprising cellulose derivatives and basic inorganic fillers. The object relates to a biodegradable resin composition comprising a cellulose derivative and a basic inorganic filler, and more particularly, by melting and processing a complex of a cellulose derivative and a basic inorganic filler. According to the preparation method, biodegradable resin comprised of cellulose derivative selected from the group consisting of cellulose acetate, cellulose diacetate, and cellulose triacetate is contained in 50 to 90 parts by weight, further comprises 10 to 50 parts by weight of a plasticizer selected from the group consisting of triacetin, triethyl citrate and glycerine; 1 to 5 parts by weight of lubricant - epoxidized soybean oil and the basic inorganic filler which is contained in 10 to 50 parts by weight. Further, the preparation method comprises kneading and melt processing by adding at least one basic inorganic filler selected from the group consisting of carbonates of alkali metals, carbonates of alkaline earth metals, tricalcium phosphate and basic zeolites. Main drawback of the invention is that at higher content of the inorganic filler, the aggregation of the filler particles in the composition occurs and the remarkable deterioration of mechanical properties is observed.

International patent application publication No.: WO2010084007A1 discloses polymer compositions comprising inorganic fillers and their preparation process. A composition including, as composition components a. more than 40% by weight of at least one thermoplastic polymer, and b. within a range from 5 to 40% by weight of at least one particulate inorganic additive, wherein the additive selected is b1. barium sulphate, and b2. optionally a further additive other than barium sulphate, the barium sulphate having particles of a particle size of less than 1 µm to an extent of at least 50% by weight, based on the total weight of the barium sulphate, and c. from 0 to 20% by weight of one or more auxiliary agents. Additionally, claimed is a process for preparing such a composition, comprising of the following steps: (i) providing the components; (ii) incorporating the particulate inorganic additive of barium sulphate and further additives selected from the group consisting of zinc sulfide, zinc oxide, silica, talc, titanium dioxide, kaolin, mica, alumina, aluminum hydroxide, magnesium oxide, hydrotalcite, calcium carbonate, dolomite, aluminum phosphate, or a combination of two or more thereof; (iii) optional after-treatment. Main drawback of the invention is that composition comprises use of synthetic and toxic petroleum derived organic additives in order to coat the particles and to avoid the clumping of the barium sulfate particles and to obtain thermally processable compositions.

The present invention is dedicated to overcoming of the above shortcomings and for producing further advantages over prior art.

### Brief description of the invention

Present invention relates to a preparation method of eco-friendly thermally processable thermoplastic cellulose acetate composition where inorganic filler particles are used. The inorganic fillers are synthesized using silica gel being a waste product obtained from production of aluminium fluoride or using opoka rock.

Method for preparation of thermoplastic cellulose acetate composition according to the invention comprises the following steps:
- fractioning, where granules of raw material cellulose acetate (CA) are fractionated by using a metal sieve system;
- synthesizing inorganic filler and milling, where the inorganic filler is synthesized by a two-step synthesis method comprising hydrothermal treatment followed by calcination and milling to produce inorganic filler particles. The inorganic filler particles are synthesized using silica gel being a waste product of aluminium fluoride production or using opoka rock;
- mixing, where the fractionated CA granules are mixed uniformly with the synthesized inorganic filler particles and a plasticizer;
- compounding and granulating, where mixture obtained in mixing step is processed in a twin-screw extruder to obtain granules of the thermoplastic cellulose acetate composition.

The method steps allow lowering amount of energy needed in the extrusion process of thermoplastic cellulose acetate composition, thus offering energetically favourable extrusion process. Composition of thermoplastic cellulose acetates according to the invention has decreased stiffness properties, thus allowing to achieve bio-based composites with controllable functional properties. Moreover, the incorporation of inorganic filler particles provided thermoplastic cellulose acetate extrudates with improved flow of melt characteristics, thereby facilitating further thermal processing of the composition.

### Detailed description of the invention

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

Abbreviations used in the specification and claims:
Cellulose acetate - CA.
Inorganic filler synthesized from opoka rock - CO.
Inorganic filler synthesized from silica gel - CS.
Polyethylene glycol 200 - PEG.
Triacetin - TA.
Triethyl citrate - TEC.
Melt mass flow rate - MFR.

One aspect of the invention is a method for preparation of eco-friendly thermally processable cellulose acetate compositions using inorganic filler particles synthesized from silica gel or opoka rock.

The method comprises adding inorganic filler particles synthesized using silica gel or opoka rock to cellulose acetate in production of thermoplastic cellulose acetate compositions. Adding the synthesized filler particles to cellulose acetate and plasticizer mixture provides compatible thermoplastic polymer compositions with improved flow of melt characteristics facilitating further thermal processing of the thermoplastic cellulose acetate composition.

Silica gel in the specification and claims is a waste product obtainable in production of aluminium fluoride according to any known methods.

Method for preparation of thermoplastic cellulose acetate composition comprises the following steps:
- fractioning, where granules of raw material CA are fractionated by using metal sieve system to separate and obtain the CA granules with particle size of 0.16-0.63 µm;
- synthesizing and milling an inorganic filler where filler is synthesized by a two-step synthesis method where hydrothermal treatment is followed by calcination and milling to produce inorganic filler particles in the range of 0.04 - 100 µm. In the synthesis step the inorganic filler particles are synthesized using silica gel or opoka rock;
- mixing, where fractionated CA granules are mixed uniformly with the synthesized inorganic filler particles and a plasticizer. The plasticizer is selected from: polyethylene glycol, triacetin, glycerol, triethyl citrate, or combination thereof. In mixing step, concentration of the cellulose acetate is preferably 30-70wt%, concentration of the plasticizer is preferably 10-35wt% and concentration of the inorganic filler particles is preferably 5-20wt%.
- compounding and granulating, where the mixture obtained in mixing step is processed in a twin-screw extruder to obtain granules of thermoplastic cellulose acetate. In compounding and granulating step temperature of the twin-screw extruder is preferably 140-190 degrees C and rotational speed of the screw is preferably 30-70 rpm.

Another aspect of the invention is thermoplastic polymer compositions obtained by the method according to the invention.

As an example, raw materials for preparation of compositions according to the invention are as follows:
- CA having degree of substitution of 2.46.
- PEG having average molecular weight of 200 Daltons.
- TA having triacetin content of 99%.
- TEC having triethyl citrate content of 98%.
- Glycerol having glycerol content of 99.0%.
- Calcium hydroxide having calcium hydroxide content of 96.0%.
- Silica gel as waste from production of aluminium fluoride.
- Opoka rock having size of pellets of 2-6 mm and density of 730 g/dm³.

Specific embodiments of method according to the invention:
According to one specific example, method for preparation of thermoplastic cellulose acetate composition comprises the following steps:
- fractioning, where granules of raw material CA are fractionated by using metal sieve system to separate and obtain the CA granules with particle size of 0.16-0.63 µm.
- synthesizing and milling an inorganic filler, where the filler is synthesized by a two-step synthesis method where hydrothermal treatment is followed by calcination. Firstly, the silica gel containing 8-10 wt% of fluoride ions is defluorinated using dynamic defluorination method. The defluorinated material is milled for 2 hours in rotating porcelain ball mill, then the powder is mixed with calcium oxide at molar ratio 1:1, transferred to pressure reactor and mixed with distilled water to obtain suspension with water to solids ratio of 4.5:1. Calcium oxide is obtained by calcining calcium hydroxide at 550°C for 1 hour and milling for 0.5 min at 950 rpm to yield particles ranging from 0.05 to 50 µm. The hydrotreatment is carried out without stirring at 200°C for 12 hours. The obtained intermediate product is dried at 105°C until constant mass. Further, the intermediate product is milled in a rotating porcelain ball mill for 2 hours and calcinated at 900°C for 1 hour in a high-temperature furnace to yield CS particles, based on wollastonite, fluorite and cuspidine. After the processing the density of CS particles is 2.8738 g/cm³, surface area is 6856 cm²/g and particle size is in the range of 0.04 - 100 µm with mean diameter of 10.78 µm.
- mixing, where fractionated CA granules are uniformly mixed with synthesized CS particles and a plasticizer, where the plasticizer is selected from polyethylene glycol, triacetin, glycerol, triethyl citrate or combination thereof using reactor equipped with shovel mixer at 5000 rpm and spraying nuzzle with the spray rate of 10 liters per hour.
- compounding and granulating, where the mixture obtained in mixing step is processed using co-rotating twin-screw extruder composed of six segmented barrels; length to diameter (LID ratio) of 40:1. The screw speed is 40 rpm and feeding rate is 0.11 kg per hour.

The temperature in first barrel (feed inlet) is 140°C and in all remaining barrels is 190°C.

According to another specific example, method for preparation of thermoplastic cellulose acetate composition comprises the following steps:
- fractioning, where granules of raw material CA are fractionated by using metal sieve system to separate and obtain the CA granules with particle size of 0.16-0.63 µm.
- synthesizing and milling an inorganic filler, where the filler is synthesized by a two-step synthesis method where hydrothermal treatment is followed by calcination. Firstly, opoka rock is heated at 775°C for 2 hours to decompose calcium carbonate. The obtained is milled for 2 hours in rotating porcelain ball mill, then the powder is mixed with calcium oxide at molar ratio 1:1, transferred to pressure reactor and mixed with distilled water to obtain suspension with water to solids ratio of 4.5:1. Calcium oxide is obtained by calcining calcium hydroxide at 550°C for 1 hour and milling for 0.5 min at 950 rpm to yield particles ranging from 0.05 to 50 µm. The hydrotreatment is carried out without stirring at 200°C for 12 hours. Obtained intermediate product is dried at 105°C until constant mass. Further, the intermediate product is milled in a rotating porcelain ball mill for 2 hours and calcinated at 900°C for 1 hour in a high-temperature furnace to yield CO particles, based on wollastonite, quartz and larnite. After the processing, the density of CO particles is 2.9762 g/cm³, surface area is 9606 cm²/g and the particle size is in the range of 0.04 - 100 µm with mean diameter of 10.92 µm.
- mixing, where the fractionated CA granules are uniformly mixed with the synthesized CO particles and a plasticizer, where the plasticizer is selected from polyethylene glycol, triacetin, glycerol, triethyl citrate or combination thereof using reactor equipped with shovel mixer at 5000 rpm and spraying nuzzle with the spray rate of 10 liters per hour.
- compounding and granulating, where the mixture obtained in mixing step is processed using co-rotating twin-screw extruder composed of six segmented barrels; length to diameter (LID ratio) of 40:1. The screw speed is 40 rpm and feeding rate is 0.11 kg per hour. The temperature in first barrel (feed inlet) is 140 degrees C and in all remaining barrels is 190°C.

Performance of compositions obtained by specific first and second examples of method according to the invention was tested.

### Assessment of flow of melt properties:

MFR of mixed or extruded compositions was determined according ISO1133 standard Method A by using extrusion plastometer; barrel temperature 190°C; weight load 10 kg; die diameter 2.095mm, length 8 mm; preheating time 5 min. The sample was cut at every set time, at least 5 repetitions were done per sample and the average value was calculated. The MFR was expressed in grams per 10 min.

### Determination of extrusion parameters:

Samples of compositions obtained by the first and the second examples of method according to the invention were subjected to compounding using co-rotating twin screw extruder composed of 6 segmented barrels; length to diameter (LID ratio) of 40:1. The screw speed was set at 40 rpm and feeding rate was 0.11 kg per hour. The temperature in first barrel (feed inlet) was set at 140°C and in all remaining barrels was set at 190°C.

### Assessment of mechanical properties:

Bone-shaped (type IV) specimens of 78 mm length and thickness of 2mm of extrudates obtained by specific first and second examples of method according to the invention were obtained according ASTM D638 standard using a piston injection molding system. The temperature of the barrel and the mold was controlled at 190°C and 20°C, respectively. All the samples were injected with an injection pressure and time of 850 bar and 20s, and a post-pressure and time of 200bar and 20s, respectively. Mechanical properties of the prepared specimens were assessed according ASTM D638 standard using tensile testing machine. The strain rate for tensile test of all samples was 50 mm/min.

The flow of melt characteristics of compositions obtained by the first and the second examples of method according to the invention were compared to a blank sample (without inorganic filler) and are shown in Table 1.

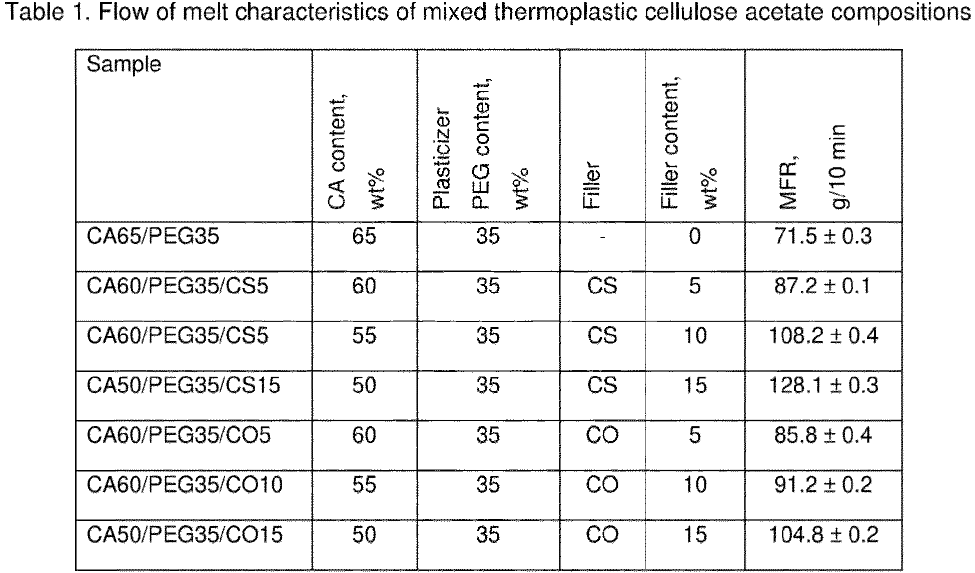

The above results show that by replacing from 5 to 15 weight percent of cellulose acetate with inorganic filler the flow of melt characteristics of mixed compositions were improved. When comparing cellulose acetate compositions comprising CS and CO particles, the MRF was increased by 22.4% - 79.2% and by 20% - 46.6%, respectively. Incorporation of inorganic filler particles provides thermoplastic cellulose acetate compositions with improved flow of melt characteristics, thereby facilitating further thermal processing.

The extrusion parameters data of the compositions obtained by the first and the second examples of method according to the invention were compared to the blank sample (without inorganic fillers) and are shown in Table 2.

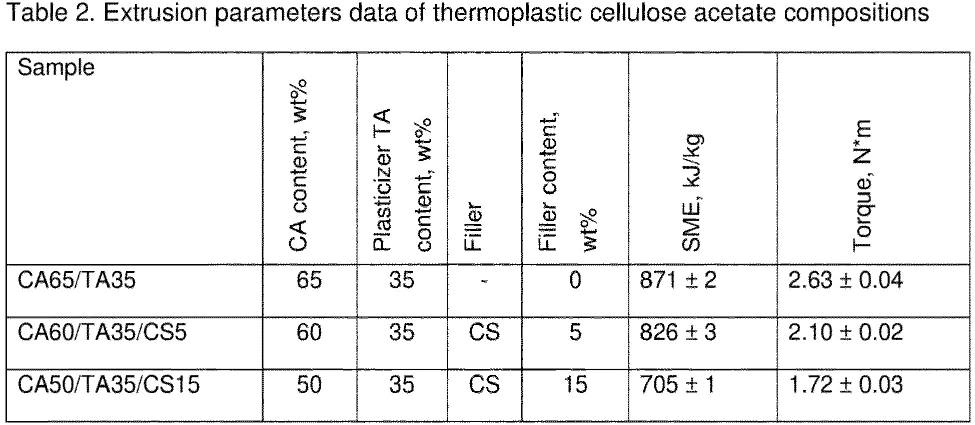

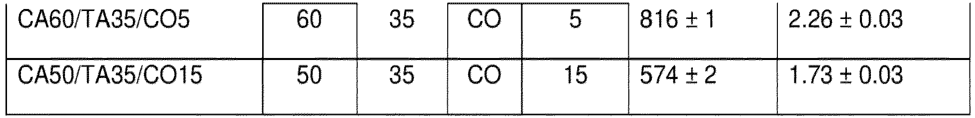

From data presented in Table 2 it can be observed that specific mechanical energy (SME), as well as torque is lower for thermoplastic cellulose compositions comprising inorganic fillers. When comparing cellulose acetate compositions comprising CS and CO particles, the SME was decreased by 5.2% - 19.1% and by 6.3% - 34%, respectively. Inorganic filler particles adjust thermoplastic cellulose acetate compositions so that lower amounts of energy in the extrusion process is required, thus offering energetically favourable extrusion process.

Flow of melt and mechanical characteristics of extruded samples of compositions obtained by the first and the second examples of method according to the invention are compared to the blank sample (without inorganic fillers) and are shown in Table 3.

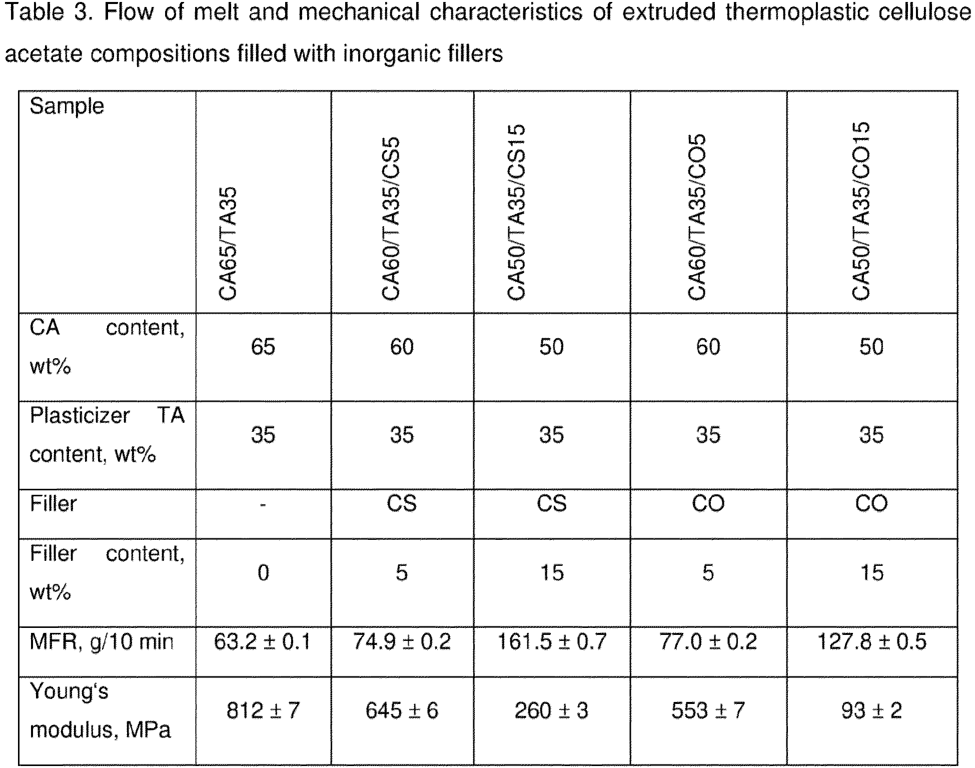

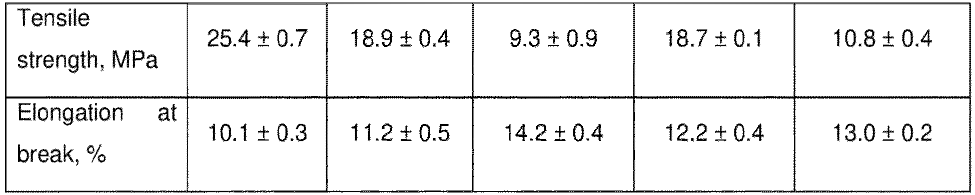

The above results show, that both types of fillers are compatible with cellulose acetate and selected plasticizers, causing no significant deterioration of mechanical properties. The samples with CS and CO particles are characterized by decreased value of Young's modulus, with the highest decrease of 88.55% and 67.98% for the samples incorporating 15% of CO and CS, respectively. The obtained thermoplastic cellulose acetate compositions have considerably decreased stiffness characterising the bio-based composites with controllable functional properties. Moreover, the flow of melt characteristics of extrudates of thermoplastic cellulose acetate compositions comprising inorganic filler particles are improved, facilitating further thermal processing.

The invention provides thermoplastic cellulose acetate compositions:
- with improved flow of melt characteristics, facilitating further thermal processing
   - allowing to lower consumption of energy in the extrusion process, thus offering energetically favourable compounding process.
- with varying stiffness properties, thus allowing to achieve bio-based compositions with controllable functional properties.
- allowing to exploit sustainable, easily available natural and waste materials. Thus, allowing to achieve economic and environmental effects.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. Method for preparation of thermoplastic cellulose acetate composition comprising cellulose acetate and plasticizer, where the method comprises fractioning and obtaining granules of raw material CA, mixing the CA granules uniformly with a plasticizer, compounding the mixture of CA granules and plasticizer and granulating the compounded CA granules and plasticizer, **characterised in that** the method further comprises synthesizing an inorganic filler to obtain inorganic filler particles and using the inorganic filler particles in mixing step with CA granules and plasticizer, where the synthesizing step comprises hydrothermal treatment, calcination and milling of an inorganic filler to obtain particles.

2. The method according to claim 1, wherein the inorganic filler particles are silica gel-based particles, where silica gel is waste from production of aluminium fluoride.

3. The method according to claim 1, wherein the inorganic filler particles are opoka rock-based particles.

4. The method according to any one of claims 1-3, wherein size of the inorganic filler particles is in the range of 0.04 - 100 µm.

5. The method according to any one of claims 1-4, wherein the cellulose acetate is present in an amount of 30-70 % by weight, inorganic filler particles are present in an amount of 5-20 % by weight and plasticizer is present in an amount of 10-35 % by weight in method for preparation of thermoplastic cellulose acetate composition.

6. The method according to any one of previous claims, wherein the plasticizer is selected from polyethylene glycol, triacetin, glycerol and triethyl citrate, or combination thereof.

7. The method according to any one of previous claims, wherein temperature of twin-screw extruder used for compounding the CA granules uniformly with the plasticizer and filler particles is 140-190°C, and the rotational speed of the screw is 30-70 rpm.

8. Thermoplastic cellulose acetate composition obtained by method according to any one of previous claims.
